# EUROPEAN PATENT APPLICATION

(11) **EP 4 699 837 A2**
(43) Date of publication of application: **25.02.2026**
(21) Application number: 25216398.5
(22) Date of filing: 09.04.2024
(51) Int. Cl.: B60K 1/00

(54) **AXLE AND MOTOR VEHICLE COMPRISING SAID AXLE**

(30) Priority: 13.04.2023 IT 202300007071
(62) Divisional of application: 24169200.3
(71) Applicant: FERRARI S.p.A., 41100 Modena (IT)
(72) Inventor: FAVARETTO, Fabrizio, 41100 MODENA (IT)
(74) Representative: Studio Torta S.p.A.

(57) **Abstract**

An electric axle (15; 10) for a motor vehicle (1), comprising: a first wheel (16; 11), which can rotate around a first axis (C; A); a second wheel (17; 12), which can rotate around a second axis (D; B); and an electric motor (30, 35), which is operatively connected to said first and second wheel (16, 17; 11, 12); the electric motor (30, 35) comprises, in turn, an output shaft (31, 36), which can rotate around a third axis (X1, X2) orthogonal to said first and second axis (C, D; A, B).

## Description

### CROSS-REFERENCE TO RELATED APPLICATIONS

This patent application claims priority from Italian patent application no. 102023000007071 filed on April 13, 2023, the entire disclosure of which is incorporated herein by reference.

### TECHNICAL FIELD

The invention relates to an axle, in particular a motor-driven electric axle.

The invention also relates to a motor vehicle comprising said axle.

### BACKGROUND

Electric motor vehicles comprise, in a known manner:
- a front axle comprising a pair of front wheels;
- a rear axle comprising a pair of rear wheels; and
- a drive assembly comprising at least one electric machine operating as electric motor and operatively connected to the front and/or rear wheels so as to transmit a drive torque to the front and/or rear wheels.

Said motor vehicles further comprise one or more electric batteries designed to power the electric machine with the necessary quantity of electric power in the batteries.

The range of electric motor vehicles is determined by the quantity of electrical energy than can stored per volume unit.

In the state of the art, said value approximately is one tenth of the quantity of energy that can be stored per volume unit through the use of a fossil fuel.

This sets limits to the performances of electric motor vehicles, especially when they are used on tracks or for professional races.

Indeed, as it is known, when driving along a bend, motor vehicles counter centrifugal force through the friction of the tyres against the ground in a radial direction relative to the arc described by the bend.

As a consequence, for a given radius of the bend, the square of the maximum travelling speed of a motor vehicle in conditions of grip is proportional to the vertical load acting upon the tyres.

In order to increase said load up to values exceeding the weight of the motor vehicle, motor vehicles are provided with downforce aerodynamic surfaces, namely shaped so as to generate an additional vertical downward thrust. Said vertical downward thrust, known as "downforce", is proportional to the square of the driving speed of the motor vehicle and to a downforce coefficient associated with the shape of the aerodynamic surface.

The increase in said downforce inevitably leads to an increase in the aerodynamic resistance of the motor vehicle.

This is due to the fact that the downforce coefficient of the aerodynamic surface is proportional to the resistance coefficient.

Because of this increase in aerodynamic resistance, electric motors must deliver a greater electric power in order to maintain desired speed values on straight stretches of road.

Said electric power increase further jeopardizes the range of the motor vehicle.

Therefore, in order to increase the range of the motor vehicle, thus enabling an acceptable sports use, the aerodynamic resistance of the motor vehicle should be reduced as much as possible, without jeopardizing the overall weight acting upon the wheels.

In other words, the overall resistance coefficient of the motor vehicle should be reduced, though without affecting the downforce coefficient of the aerodynamic surfaces.

As it is known, said resistance coefficient is determined, to a significant extent, by the layout of the rear portion of the motor vehicle, namely by the dimensions of the motor vehicle along a transverse dimension, which is orthogonal to a normal forward driving direction of the motor vehicle.

Axles are known, for example from EP-A-3597464, which comprise a pair of electric machines operatively connected to respective wheels and comprising respective output shafts arranged parallel to the transverse direction of the motor vehicle.

The dimensions of said electric machines determine a lower limit for the maximum front section of the motor vehicle in the rear portion and, hence, a lower limit for the overall resistance coefficient and for the resulting energy consumptions of the motor vehicle.

In the automotive industry, an electric axle for a motor vehicle is needed, which reduces energy consumptions, though preserving a high aerodynamic load, so as to significantly increase the range of the motor vehicle, especially in racing mode.

Furthermore, the overall inertia of the motor vehicle needs to be reduced, with a consequent improvement in the dynamic performances of the motor vehicle.

US-A-2011/259657 discloses an axle according to the preamble of claim 1.

### SUMMARY

The object of the invention is to provide an axle, which is capable of fulfilling at least one of the needs discussed above.

The aforesaid object is reached by the invention, as it relates to an axle for a motor vehicle as defined in claim 1.

### BRIEF DESCRIPTION OF THE DRAWINGS

The invention will be best understood upon perusal of the following detailed description of a preferred embodiment, which is provided by way of non-limiting example, with reference to the accompanying drawings, wherein:
- figure 1 is a top view of a motor vehicle comprising an axle according to the invention;
- figure 2 is a top view, on a much larger scale, of the axle of figure 1;
- figure 3 is a perspective view, in a further larger scale, of some components of the axle of figures 1 and 2; and
- figure 4 is an exploded perspective view of the components of the axle of figure 3.

### DESCRIPTION OF EMBODIMENTS

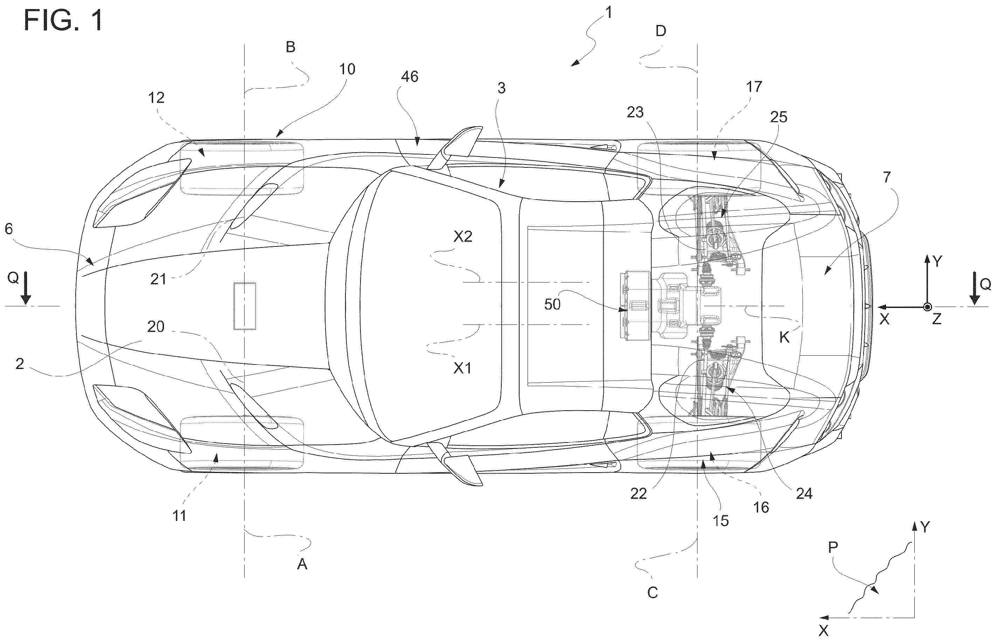

With reference to Figure 1, number 1 indicates a motor vehicle comprising a body 2 defining a passenger compartment 3.

The motor vehicle 1 is a top-of-the-range motor vehicle designed both for a conventional urban/suburban use and for a racing track use.

Furthermore, the motor vehicle 1 is a hybrid or electric vehicle and is provided with electric batteries (not shown).

Hereinafter, expressions such as "above", "under", "in front of", "behind" and others similar to them are used with reference to normal driving conditions of the motor vehicle 1.

Furthermore, it is possible to define:
- a longitudinal axis X integral to the body 2, which, in use, is horizontal and parallel to a normal driving direction of the motor vehicle 1 indicated in Figures 1 to 4;
- a transverse axis X integral to the body 2, which, in use, is horizontal and orthogonal to the axis X; and
- an axis Z integral to the body 2, which, in use, is vertical and orthogonal to the axes X, Y.

The axes X, Y define a horizontal plane P integral to the body 2 and arranged, in use, substantially horizontal.

The axes X, Z define a vertical plane Q integral to the body 2 and arranged, in use, substantially vertical.

For the purposes of the following disclosure, the plane Q is a longitudinal middle plane of the motor vehicle 1.

The body 2 defines a front 6 and a rear 7, with reference to a normal forward driving direction parallel to the axis X.

The motor vehicle 1 further comprises:
- a rear axle 10; and
- a front axle 15.

The axle 10 comprises, in turn:
- a pair of front wheels 11, 12, which can rotate around respective axes A, B; and
- a pair of axle shafts 20, 21 connected to the respective front wheels 11, 12.

The axle 15 comprises, in turn:
- a pair of rear wheels 16, 17, which can rotate around respective axes C, D; and
- a pair of axle shafts 22, 23 connected to the respective rear wheels 16, 17.

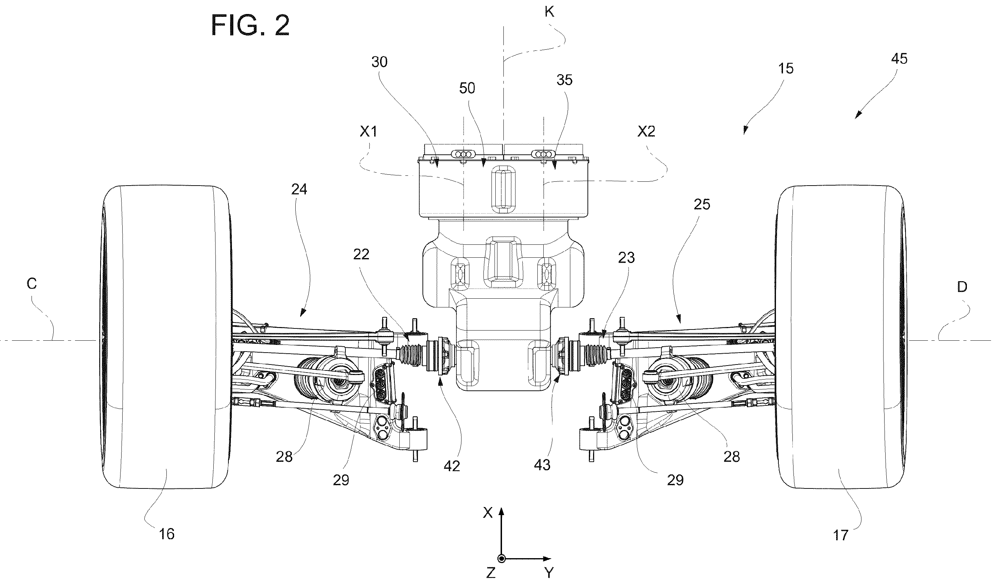

Hence, the motor vehicle 1 comprises:
- an unsprung mass 45 (figure 2) comprising, in turn, the body 2;
- a sprung mass 46 comprising, in turn, the axles 10, 15;
- a pair of front suspensions (not shown) of the known kind and configured to elastically suspend the front wheels 11, 12 of the unsprung mass 45 to the body 2 of the sprung mass 46; and
- a pair of rear suspensions 24, 25 of the known kind and configured to elastically suspend the rear wheels 16, 17 of the unsprung mass 45 to the body 2 of the sprung mass 46.

Each front and rear suspension 24, 25 comprises, extremely in short, an elastic element 28 and a damping element 29 interposed between the respective front wheels 11, 12 (rear wheels 16, 17) and the body 2.

Each front suspension and rear suspension 24, 25 allows the front wheels 11, 12 (rear wheels 16, 17) to move, in a known manner, relative to the body 2, following the irregularities of the ground according to an approximately vertical trajectory, hence parallel to the axis Z.

Consequently, the axes A, B (C, D) of the front wheels 11, 12 (rear wheels 16, 17) always remain approximately parallel to the axis Y of the body 2.

The axle 15 further comprises:
- an electric motor 30 comprising an output shaft 31 operatively connected to the rear wheel 16; and
- an electric motor 35 comprising an output shaft 36 operatively connected to the rear wheel 17.

The motor vehicle 1 further comprises:
- an assembly 37 consisting of the electric motor 30 and of a transmission assembly 40 interposed between the output shaft 31 and the axle shaft 22; and
- an assembly 38 consisting of the electric motor 31 and of a transmission assembly 41 interposed between the output shaft 32 and the axle shaft 23.

In particular, the transmission assemblies 40, 41 comprise respective output power take-offs 42, 43 opposite the respective output shafts 30, 31 and connected to respective axle shafts 22, 23.

The output shafts 31, 32 can advantageously rotate around respective axes X1, X2, which are orthogonal relative to the axes C, D.

More in detail, the axes X1, X2 are parallel to one another and to a common axis K.

The axis K lies on the plane Q of the motor vehicle 1.

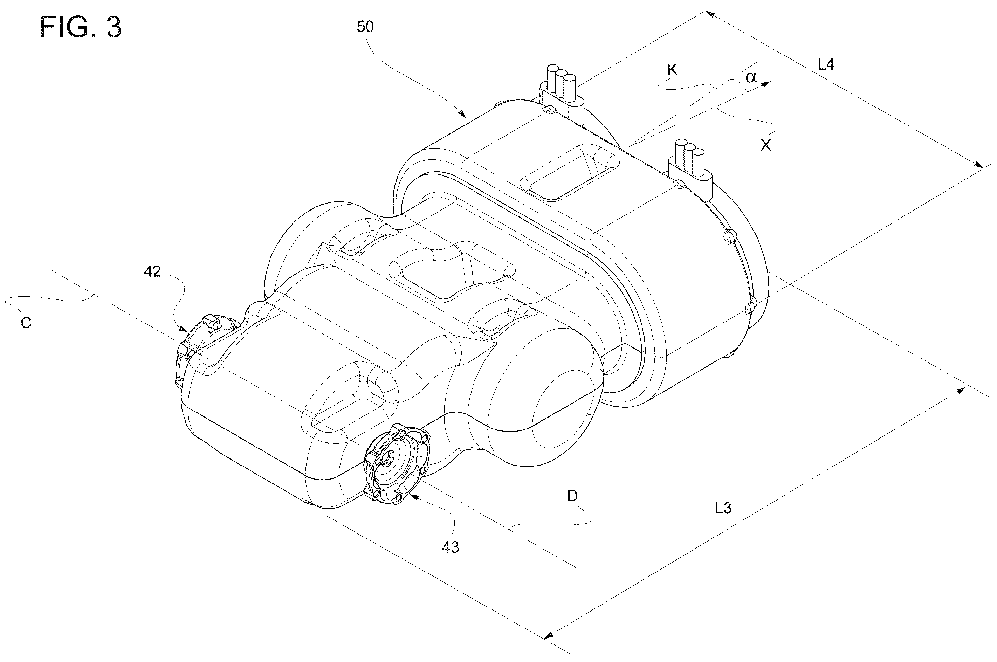

The axis K defines, with the axis X, an angle α (Figure 3) oriented towards the front 6 and ranging from 0 to 90 degrees, more preferably between three and seven degrees.

The angle α is, in the specific case shown herein, five degrees.

In particular, each assembly 37, 38 has a length L1 parallel to the axis K, which is greater than a width L2 parallel to the axis Y.

The motor vehicle 1 further comprises a casing 50 accommodating both motors 30, 35 and the relative transmission assemblies 40.

In particular, the casing 50 serves as stator for the electric motors 30, 35.

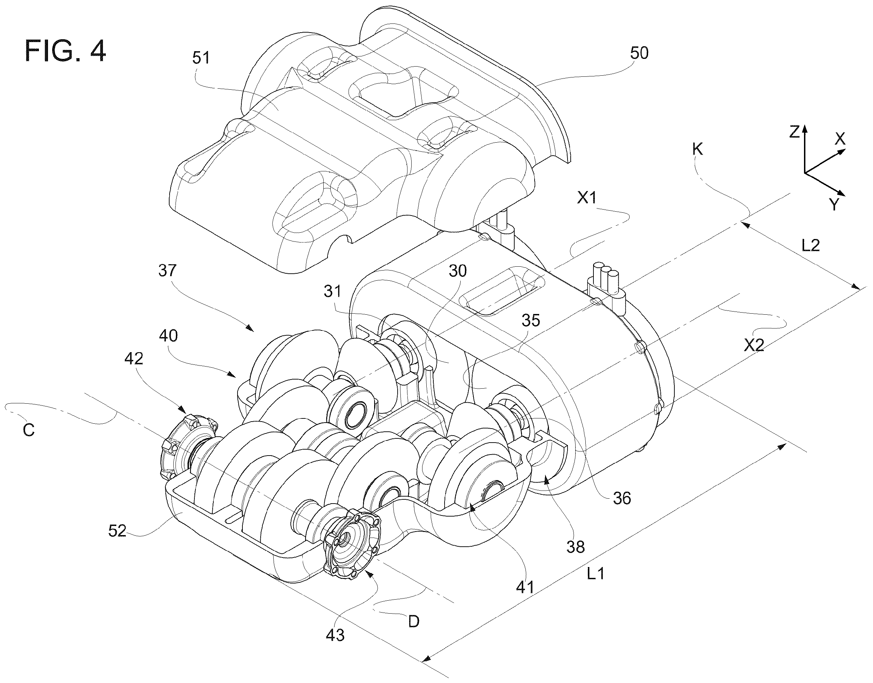

The casing 50 has a length L3 parallel to the axes X1, X2 and a width L4 parallel to the axes X1, X2. The length L3 is greater than the length L4 (Figure 4).

Each casing 50 consists of a pair of half-shells 51, 52 shown in Figure 4.

The motors 30, 35 extend from the side of the front 6, with reference to the axes C, D.

The motors 30, 35 can be operated independently of one another, so as to exert respective drive torques, which can be adjusted independently of one another, upon the rear wheels 16, 17.

The motor vehicle 1 further comprises a braking system (not shown) configured to exert a plurality of braking torques upon the respective front wheels 11, 12 and rear wheels 16, 17.

The aforesaid braking system could be of the traditional kind, namely acting through "friction", or of the regenerative kind capable of transforming the kinetic energy of the braked front wheels 11, 12 and the rear wheels 16, 17 into electric energy to be stored in the batteries or of the combined heat-regenerative kind.

In use, the electric motors 30, 35 are operated independently of one another so as to generate respective drive torques acting upon the rear wheels 16, 17 by means of the corresponding transmission assemblies 40, 41, so as to cause the motor vehicle 1 to move forward.

The disclosure above reveals evident advantages that can be reached with the invention.

In particular, the output shafts 31, 32 of the electric motors 35 of the axle 15 can rotate around respective axes X1, X2 orthogonal to the axes C, D of the corresponding rear wheels 16, 17.

In this way, the electric motors 30, 35 are side by side and are parallel to the axis K of the motor vehicle 1.

This reduces the overall dimensions of the motor vehicle 1 parallel to the axis Y in the region of the axle 15, namely at the rear 7 of the body 2.

This reduction of dimensions allows the body 2 - in particular the rear 7 - to be shaped according to a more aerodynamic layout compared to known solutions discussed in the introduction to the description.

By so doing, the overall resistance coefficient of the motor vehicle 1 can be reduced, though without affecting the downforce coefficient of the motor vehicle 1.

Therefore, consumptions are reduced and, hence, the range of the motor vehicle 1 increases, preserving at the same time the ability of the motor vehicle 1 to travel along curved trajectories at high speeds.

In short, the motor vehicle 1 ensures particularly high performances and can be used for races.

The assemblies 37, 38 have a longitudinal length L1 parallel to the axis K, which is greater than transverse length L2 parallel to the axis Y.

Besides the advantages indicated above, this further reduces the overall inertia of the motor vehicle 1, with a consequent improvement in the dynamic performances of the motor vehicle 1.

Finally, the axle 15 and the motor vehicle 1 according to the invention can be subjected to changes and variations, which, though, do not go beyond the scope of protection set forth in the appended claims.

In particular, the motor vehicle 1 could comprise one single electric motor 30, 35 connected to one or both of the rear wheels 16, 17 or front wheels 11, 12.

The electric motors 30, 35 could be part of the front axle 10, instead of being part of the rear axle 15, thus obtaining a front-wheel drive motor vehicle 1.

The front axle 10 could comprise electric motors similar to the electric motors 30, 35 available on the axle 15, thus obtaining an all-wheel drive motor vehicle 1.

## Claims

1. A motor vehicle (1) comprising:
- a body (2) defining a front (6) and a rear (7), with reference to a normal forward driving direction of the motor vehicle (1);
an electric axle (10, 15);
said electric axle (15; 10) comprising, in turn:
- a first wheel (16; 11), which can rotate around a first axis (C; A);
- a second wheel (17; 12), which can rotate around a second axis (D; B); and
- at least one first electric motor (30, 35), which is operatively connected to said first and second wheel (16, 17; 11, 12);
said first electric motor (30, 35) comprising, in turn, a first output shaft (31, 36), which can rotate around a third axis (X1, X2) orthogonal to said first and second axis (C, D; A, B); and
- a fourth longitudinal axis (X), which is parallel to said normal forward moving direction of the motor vehicle (1) and is horizontal in a normal driving condition of the motor vehicle (1);
said front and rear (6, 7) being arranged one after the other in a direction parallel to said fourth axis (X);
said first electric motor (30, 35) extending from the side of said front (6) relative to said first and second axis (C, D; A, B), moving along said fourth axis (X);
**characterized in that** said third axis (X1, X2) is inclined relative to said fourth axis (X), preferably at an angle (a) ranging from 3 to 7 degrees.

2. The motor vehicle according to claim 1, **characterized in that** it comprises at least one first transmission assembly (40, 41) interposed between said first electric motor (30, 35) and said first and second wheel (16, 17; 10, 11).

3. The motor vehicle according to claim 1 or 2, **characterized in that** said first electric motor (30, 35) and said first transmission assembly (40, 41) have a first length (L1) parallel to said third axis (X1, X2) and a first width (L2) orthogonal to said third axis (X1, X2); said first length (L1) being greater than said first width (L2).

4. The motor vehicle according to any one of the foregoing claims, **characterized in that** said first electric motor (30, 35) is operatively connected to said first wheel (16, 11), and **in that** it comprises a second electric motor (35, 30) operatively connected to said second wheel (17, 12);
said second electric motor (35, 30) comprising, in turn, a second output shaft (36, 31), which can rotate around a fourth axis (X2, X1) orthogonal to said first and second axis (C, D; A, B) and parallel to said third axis (X1, X2).

5. The motor vehicle according to claim 4, **characterized in that** said first transmission assembly (40) is interposed between said first output shaft (31) and said first wheel (16, 17; 10, 11);
said axle (15) further comprising:
- a second transmission assembly (41) interposed between said second output shaft (36) and said second wheel (17; 12); and
- a casing (50) accommodating said first electric motor, said second electric motor (30, 35), said first transmission assembly and said second transmission assembly (40, 41);
said casing (50) having a second length (L3) parallel to said third axis (X1, X2) and a second width (L4) orthogonal to said third axis (X1, X2); said second length being greater than said second width.

6. The motor vehicle according to claim 4 or 5, **characterized in that** said first and second electric motor (30, 35) can be operated independently of one another.

7. The motor vehicle according to any one of the foregoing claims, **characterized in that** it comprises, with reference to said normal forward driving direction:
- a front axle (10); and
- said rear axle (15).

8. The motor vehicle according to claim 7, **characterized in that** it is a hybrid or electric vehicle.
